# EUROPEAN PATENT APPLICATION

(11) **EP 2 339 436 A2**
(43) Date of publication of application: **29.06.2011**
(21) Application number: 10191572.6
(22) Date of filing: 17.11.2010
(51) Int. Cl.: G06F 3/041

(54) **Display apparatus and touch sensing method**

(30) Priority: 07.12.2009 KR 20090120387
(71) Applicant: SAMSUNG ELECTRONICS CO., LTD., Suwon-si, Gyeonggi-do (KR)
(72) Inventor: Kim, Jung-geun, Gyeonggi-do (KR); Kim, Yoo-tai, Gyeonggi-do (KR); Lee, Dong-heon, Seoul (KR); Shin, Jung-hoon, Gyeonggi-do (KR); Kim, Jung-a, Gyeonggi-do (KR)
(74) Representative: Hewett, Jonathan Michael Richard

(57) **Abstract**

A display apparatus and a touch sensing method are provided. The display apparatus includes a touch screen which senses a touch by a user using a plurality of sensing types; and a controller which selects a sensing type based on an application. Therefore, a user's touch is sensed using an optimal sensing type for each application. In doing so, malfunction or inconvenience in manipulating the touch screen can be reduced.

## Description

The present invention relates to a display apparatus and a touch sensing method, and more particularly, to a display apparatus which senses a touch by a user using a plurality of touch sensing types.

A touch screen used to select icons or graphical user interface (GUI) items such as a menu or an anchor displayed on a screen has become common. Such a touch screen may be a resistive, capacitive, and infrared type touch screen, and a display apparatus employs one of the touch screens in consideration of pros and cons thereof.

Since a display apparatus employs a touch screen having more advantages than disadvantages, a user must put up with inconvenience of using the touch screen.

Therefore, there is a need for methods having only the advantages of using the touch screen. In particular, the operation of selecting the type of touch screen by a user may cause the user to experience inconvenience. Accordingly, the most optimal touch screen should be employed without any additional manipulation by a user.

Exemplary embodiments of the present invention provide a display apparatus which more accurately senses a touch operation by a user and relieves a user's fatigue caused by malfunction or inconvenience in manipulating a touch screen, and a touch sensing method thereof.

According to an aspect of the present invention, there is provided a display apparatus including a touch screen which senses a touch by a user using a plurality of sensing types; and a controller which selects at least one of the plurality of sensing types based on one of a type of an application being executed and a display state of the application, and causes the touch to be sensed according to the selected at least one of the plurality of sensing types.

The display apparatus may further include a storage unit which stores one of first information matching at least one application with the plurality of sensing types and second information matching the display state with the plurality of sensing types, wherein the controller analyzes the first and second information, and selects the at least one of the plurality of sensing types to be applied to the application being executed.

The plurality of sensing types may include at least two of a resistive sensing type, a capacitive sensing type, a surface acoustic wave sensing type, an infrared sensing type, an optical sensing type, and a strain gauge sensing type.

If the application being executed requires more dragging operations than a predetermined number per a predetermined time period, the controller may select the capacitive sensing type.

If the application being executed requires more touch operations than a predetermined number per a predetermined time period, the controller may select the resistive sensing type.

If the application being executed requires more touch operations than a predetermined number on a boundary of the touch screen, the controller does not select the infrared sensing type.

If a plurality of applications are being executed, the controller may control that a respective sensing type is selected individually for each application, and that a current touch is sensed according to the respective sensing type, which is selected based on the application currently activated on the touch screen among the plurality of applications.

According to another aspect of the present invention, there is provided a display apparatus including a touch screen which senses a touch using a plurality of sensing types; and a controller which selects one of a plurality of touch signals generated depending on the plurality of sensing types, based on one of a type of an application being executed and a display state of the application, and controls the application to be executed according to the selected touch signal.

According to another aspect of the present invention, there is provided a touch sensing of a display apparatus operable to sense a touch using a plurality of sensing types, the touch sensing method including selecting at least one of the plurality of sensing types based on one of a type of an application being executed and a display state of the application; sensing, at the display apparatus, the touch according to the selected at least one of the plurality of sensing types; and operating the application based on the sensed touch.

The touch sensing method may further include storing one of first information matching at least one application with the plurality of sensing types and second information matching the display state with the plurality of sensing types, analyzing the first and second information, and selecting the at least one of the plurality of sensing types to be applied to the application being executed.

The plurality of sensing types may include at least two of a a resistive sensing type, a capacitive sensing type, a surface acoustic wave sensing type, an infrared sensing type, an optical sensing type, and a strain gauge sensing type.

If the application being executed requires more dragging operations than a predetermined number per a predetermined time period, the selecting operation comprises selecting the capacitive sensing type.

If the application being executed requires more touch operations than a predetermined number per a predetermined time period, the selecting operation comprises selecting the resistive sensing type.

If the application being executed requires more touch operations than a predetermined number on a boundary of the touch screen, the selecting operation does not include selecting the infrared sensing type.

If a plurality of applications are being executed, the selecting operation includes selecting a respective sensing type individually for each application, and the sensing operation includes sensing a current touch according to the respective sensing type which is selected based on the application currently activated on the touch screen among the plurality of applications.

According to another aspect of the present invention, there is provided a touch sensing method of a display apparatus operable to sense a touch using a plurality of sensing types, the touch sensing method including selecting one of a plurality of touch signals generated depending on the plurality of sensing types based on one of a type of an application being executed and a display state of the application; sensing, at the display apparatus, the touch according to a selected one of the plurality of sensing types; and operating the application according to the selected one of the plurality of touch signals.

According to another aspect of the present invention, there is provided a display apparatus including a sensor which senses at least one type of a plurality of manipulation sensing types, wherein the sensor is operable to sense the plurality of manipulation sensing types; and a controller which selects the at least one type of the plurality of manipulation sensing types based on at least one of a video currently being played back, a type of application being executed, and a display state of the application.

The sensor may sense at least two types of the plurality of manipulation sensing types and the controller may calculate a coordinate based on a result of sensing the at least two of the plurality of manipulation sensing types.

The controller calculates the coordinate based on an average of each of the at least two types of the plurality of manipulation sensing types.

According to another aspect of the present invention, there is provided a method of selecting a manipulation sensing type among a plurality of manipulation sensing types. The method includes sensing at least one type of the plurality of manipulation types; and selecting the at least one type of the plurality of manipulation sensing types based on at least one of a video currently being played back, a type of application being executed, and a display state of the application.

At least two types of the plurality of manipulation sensing types may be sensed. The method further includes calculating a coordinate based on a result of sensing at least two of the plurality of manipulation sensing types.

The calculating may include calculating the coordinate based on an average of respective results of sensing the at least two types of the plurality of manipulation sensing types.

The above and/or other aspects of the present invention will become apparent and more readily appreciated from the following description of the exemplary embodiments taken in conjunction with the accompanying drawings, in which:
FIG. 1 is a block diagram illustrating a display apparatus according to an exemplary embodiment of the present invention;
FIG. 2 is a block diagram illustrating a sensor according to an exemplary embodiment of the present invention;
FIG. 3 is a view provided to explain a method for sensing a touch under a resistive sensing type;
FIG. 4 is a view provided to explain a method for sensing a touch under a capacitive sensing type;
FIG. 5 is a view provided to explain a method for sensing a touch under an infrared sensing type;
FIG. 6 is a view provided to explain the case in which a capacitive sensing type is selected;
FIG. 7 is a view provided to explain the case in which a resistive sensing type is selected;
FIG. 8 is a view provided to explain the case in which an infrared sensing type is excluded;
FIG. 9 is a flowchart provided to explain a method for sensing a touch according to an exemplary embodiment; and
FIG. 10 is a flowchart provided to explain a method for sensing a touch according to another exemplary embodiment.

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that exemplary embodiments can be carried out without those specifically defined matters. Also, well-known functions or constructions are not described in detail since they would obscure the invention with unnecessary detail.

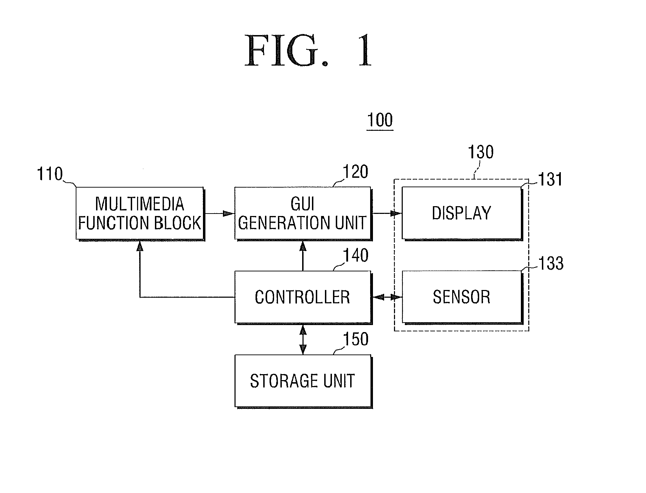

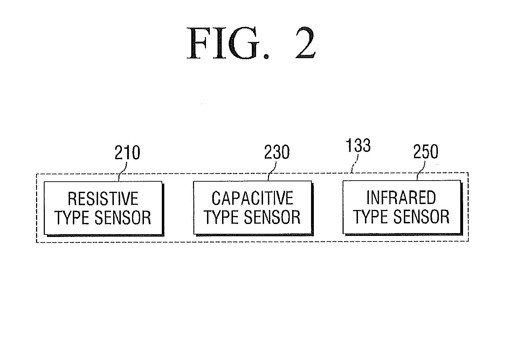

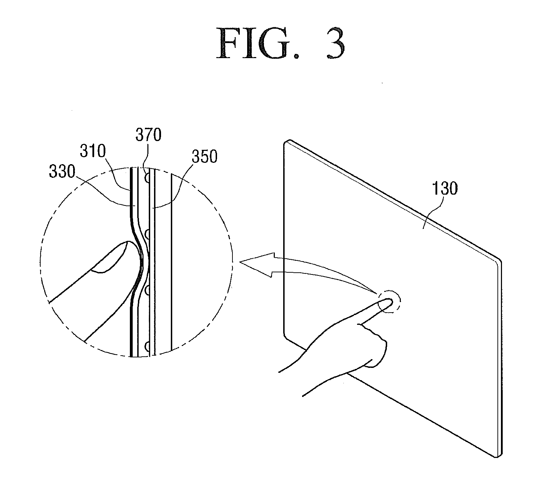

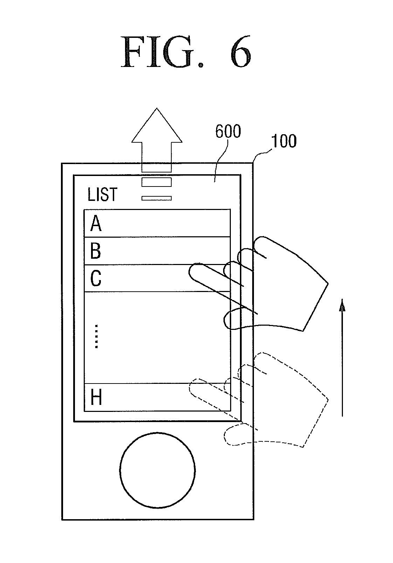

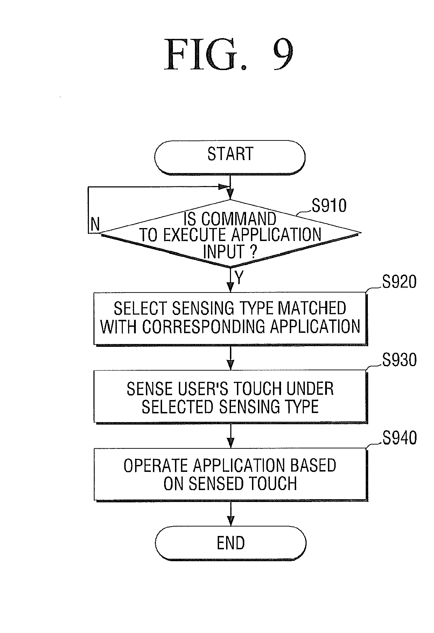

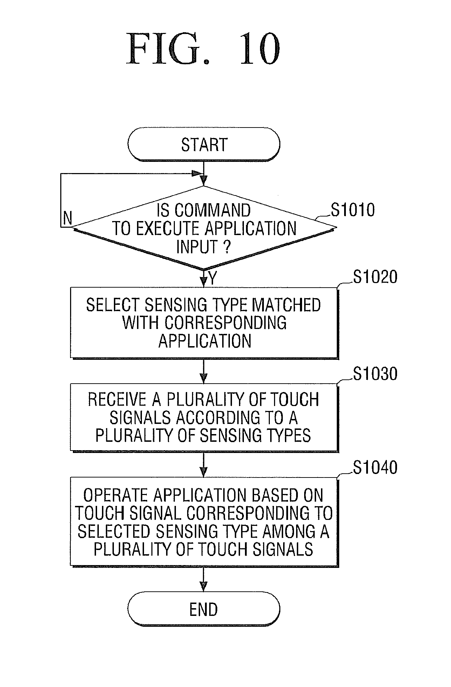

The structure of a display apparatus will be explained with reference to FIGS. 1 and 2, and a touch sensing type will be explained with reference to FIGS. 3 to 5. The operation of selecting a touch sensing type will be explained with reference to FIGS. 6 to 8, and the process of sensing a touch by a user will be explained with reference to FIGS. 9 and 10.

Herein below, the structure of a display apparatus which senses a touch by a user will be explained with reference to FIGS. 1 and 2.

FIG. 1 is a block diagram illustrating the display apparatus 100 according to an exemplary embodiment of the present invention. The display apparatus 100 senses a touch by a user in various manners, and displays a screen in response to the sensed touch.

The display apparatus 100 comprises a multimedia function block 110, a graphical user interface (GUI) generation unit 120, a touch screen 130, a controller 140, and a storage unit 150.

The multimedia function block 110 causes a screen to be displayed in response to a manipulation by a user. In particular, the multimedia function block 110 plays back contents such as a motion picture, a still image, music, and a text in order to display a screen according to a manipulation by a user, or executes and operates various applications. The operations capable of being performed by the multimedia function block 110 may be decided according to the type of the display apparatus 100.

The GUI generation unit 120 generates an item or a GUI such as a content item, adds the generated item or GUI to a video played back by the multimedia function block 110 or to an application executed or operated by the multimedia function block 110.

A video played back by the multimedia function block 110 or an application executed by the multimedia function block 110 is displayed on the touch screen 130. The touch screen 130 also displays thereon a GUI generated by the GUI generation unit 120.

The touch screen 130 comprises a display 131 and a sensor 133, and the above mentioned video or application is displayed on the display 131.

The sensor 133 receives a manipulation such as touch and drag-and-drop from a user. The sensor 133 comprises a plurality of touch sensing means to sense a touch according to a plurality of touch sensing types. This will be explained later with reference to FIG. 2.

The controller 140 controls the multimedia function block 110 according to a manipulation input through the touch screen 110 or other manipulation means (not shown). The controller 140 controls the GUI generation unit 120 to display a GUI corresponding to a user's manipulation on the display 131 of the touch screen 130.

As described above, since the sensor 133 comprises the plurality of touch sensing means so as to sense a touch according to the plurality of touch sensing types, the controller 140 selects one or more touch sensing types based on the video currently being played back, the type of application being executed, or the display state of the application.

For instance, if a specific application only requires a specific touch sensing type to be executed, the controller 140 causes only the specific touch sensing type, not another sensing type, to be applied to the application.

The storage unit 150 stores various programs and applications to operate the display apparatus 100. The storage unit 150 stores information matching an application with a touch sensing type to be applied to the application.

The controller 140 may apply a corresponding touch sensing type to a specific application based on the matching information stored in the storage unit 150 if the specific application is executed.

FIG. 2 is a block diagram illustrating the sensor 133 according to an exemplary embodiment of the present invention.

As shown in FIG. 2, the sensor 133 comprises a resistive type sensor 210, a capacitive type sensor 230, and an infrared type sensor 250.

The resistive type sensor 210 is a means of sensing input from contact with nearly any object (finger, stylus/pen, palm). Resistance and current are varied by physical pressure to the touch screen 130, and the resistive type sensor 210 measures coordinates at the point touched on the touch screen 130 based on the varied resistance and current.

The capacitive type sensor 230 is a means of sensing input from contact with a finger or a conductive object. If a user touches the touch screen 130 using his or her finger, the current flows from the touch screen 130 to the finger, and thus the capacitive type sensor 230 measures coordinates at the point touched on the touch screen 130 based on the change in capacitance.

The infrared type sensor 250 is a means of sensing input from contact using infrared rays. The infrared type sensor 250 uses the feature of infrared rays that travel straight and thus cannot advance beyond an obstacle. Therefore, if a user touches the touch screen 130, infrared rays which are horizontally and vertically radiated are blocked at the point touched on the touch screen 130. Then, the touch screen 130 measures x, y coordinates at the point, and obtains the touched location.

The above explanation is merely exemplary. The sensor 133 may also comprise other types of a sensor in addition to the resistive type sensor 210, the capacitive type sensor 230, and the infrared type sensor 250, and thus may sense a user's touch using other types besides the resistive, capacitive, and infrared types.

The other types of sensors may be a surface acoustic wave type, optical type, and strain gauge type of a touch screen.

In the surface acoustic wave type, the touch screen 130 mounts an acoustic wave transmitter and an acoustic wave receiver on four corners. Then, a reflector creates coordinates on a surface of the touch screen 130, and if a user touches the touch screen 130 using an object, the object disturbs waves and thus the touch screen 130 measures x, y coordinates at the point of the disturbed waves.

In the optical type, if infrared light creates a shadow of an object which touches the touch screen 130, infrared cameras mounted on the corners of the touch screen 130 photograph the shadow, and thus measure x, y coordinates using the photographed shadow.

In the strain gauge type, springs and strain gauges are mounted on four corners of the touch screen 130. If a user touches his or her finger or an object on four corners of the touch screen 130, the springs and strain gauges sense pressure, and then measure x, y coordinates using the sensed pressure.

In addition to the above-described types of touch sensing means, other types of touch sensing means may be mounted.

### Sensing Type

Herein below, touch sensing types will be explained with reference to FIGS. 3 to 5.

FIG. 3 is a view provided to explain a method for sensing a touch under a resistive sensing type.

Referring to FIG. 3, the touch screen 130 consists of a plurality of layers which are made of transparent material to sense a touch under a resistive sensing type. The touch screen 130 comprises a stable layer 310, a first conductive layer 330, a second conductive layer 350, and spacer dots 370.

The stable layer 310 is made of an insulator which prevents current flowing on the touch screen 130 from affecting the operation of the touch screen 130, and prevents a liquid crystal from being pressed and thus damaged when a user touches the touch screen 130. Glass or plastic is mainly used to configure such a stable layer 310.

The first conductive layer 330 and the second conductive layer 350 are made of material having electrical resistivity and conductivity to sense a touched point. There is a thin space of an insulating state between the first and second conductive layers 330 and 350. If a user touches the touchscreen 130, the first and second conductive layers 330 and 350 contact to each other, changing the resistance and the current. Then, the touch screen 130 measures coordinates at the touched point with reference to a signal regarding the change of the resistance and current.

The spacer dots 370 are made of nonconductive material which prevents the first and second conductive layers 330 and 350 from being conducted to each other while a user's touch is not input.

The resistive sensing type is advantageous in that dirt or dust particles do not affect a panel surface of the touch screen 130, and a user uses any object including a user's finger to touch the touch screen 130 since the touch screen 130 senses a touch by physical pressure.

The resistive sensing type is disadvantageous in that it is difficult for the touch screen 130 to sense multi-touch that a user touches a plurality of points since the touch screen 130 measures coordinates at the touched point based on a signal regarding the change of the resistance and current.

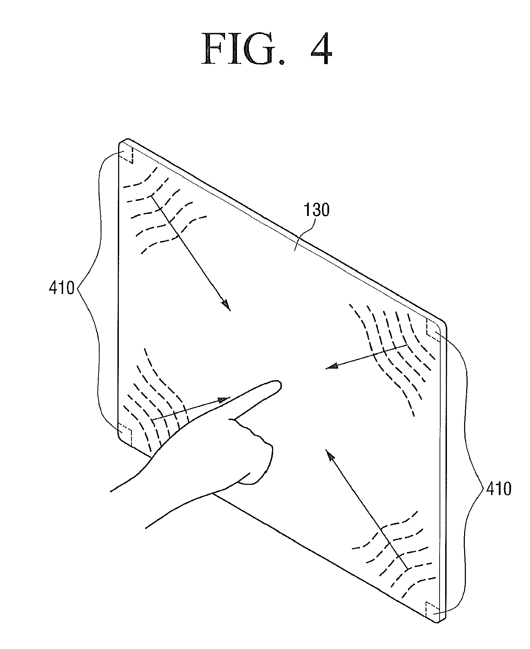

FIG. 4 is a view provided to explain a method for sensing a touch under a capacitive sensing type.

Referring to FIG. 4, sensors 410 are mounted on four corners so that the touch screen 130 senses a touch under a capacitive sensing type. Current flows continuously on the touch screen 130, and the sensors 410 accumulate charge in a horizontal and vertical direction to sense a touch under a capacitive sensing type.

As a human body also exhibits conductivity, if a user touches the touch screen 130 using his or her finger, current flows from the touch screen 130 to the finger. Then, the sensors 410 sense the change of current, and measure coordinates at the touched point.

The capacitive sensing type is advantageous in that it is easy to realize multi-touch on the touch screen 130, and the touch screen 130 can sense the slightest touch by a user, and display a high definition video better than that of a resistive type sensor. In addition, the capacitive sensing type permits more accurate operation when a user manipulates the touch screen 130 using his or her finger.

On the other hand, the capacitive sensing type is disadvantageous in that the touch screen 130 can sense a touch by only the conductive object such as an exclusive stylus or a finger, and malfunction may be caused by environmental factors since the sensors 410 which measures the change of current are very sensitive.

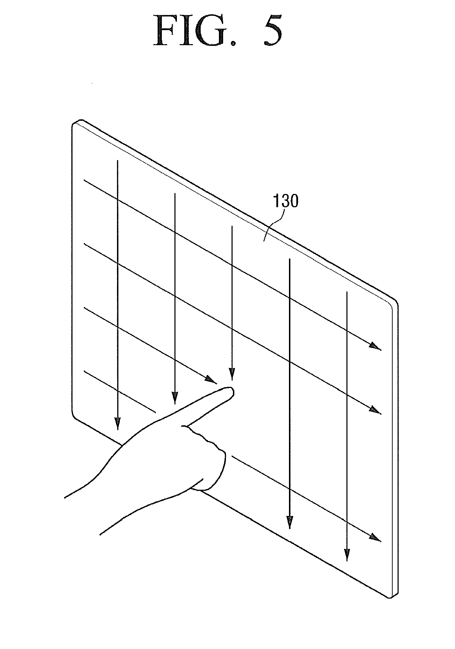

FIG. 5 is a view provided to explain a method for sensing a touch under an infrared sensing type.

The touch screen 130 comprises means of radiating or receiving infrared rays on four corners in order to sense a touch under an infrared sensing type.

The infrared sensing type uses the feature of infrared rays that travel straight and thus cannot advance beyond an obstacle. That is, if a user blocks infrared rays radiated in a horizontal and vertical direction on the touch screen 130, the touch screen 130 reads x, y coordinates on the blocked portion, and senses the touched location.

To form such infrared lattice, one of upper and lower sides of the touch screen 130 and one of left and right sides of the touch screen 130 radiate infrared rays, and the other sides opposite the sides receive the infrared rays.

Infrared rays pass slightly over the touch screen. Therefore, even if a user's finger does not contact directly to the touch screen 130, the infrared type sensor may sense a touch on the touch screen 130.

However, this may be disadvantageous in that the touch screen 130 may sense that undesired location is touched, or dirt or dust particles cause a touch.

### Selection of Sensing Type

Herein below, the case of selecting a sensing type will be explained with reference to FIGS. 6 to 8.

FIG. 6 is a view provided to explain the case in which a capacitive sensing type is selected.

Referring to FIG. 6, a list is displayed on the touch screen 130 of the display apparatus 100.

If a screen 600 having a list is displayed, or an application to show a list such as an address book is executed, the display apparatus 100 does not apply a resistive sensing type to the touch screen 130. In particular, the display apparatus 100 does not allow the resistive type sensor 210 to operate and thus the resistive type sensor 210 is disabled.

The reason why the resistive sensing type is not applied when a list is displayed is because the resistive type sensor 210 causes inconvenience to a user manipulating a list. As described above, in the resistive sensing type, the touch screen 130 measures coordinates at the point touched by physical pressure of a user. However, as shown in FIG. 6, a user drags frequently the touch screen 130 to search for a desired item in the list.

That is, a user needs to continuously drag a list using his or her finger with great energy in order to search for a desired item. Therefore, if the user frequently performs the dragging operation, the finger gets tired, thereby causing malfunction.

To overcome the above inconvenience, the display apparatus 100 applies a capacitive sensing type to the touch screen 130 in this situation. In particular, the display apparatus 100 allows the capacitive type sensor 230 to operate, and thus the capacitive type sensor 230 is enabled.

The reason why the capacitive sensing type is applied when a list is displayed is for the convenience of a user manipulating a list. As described above, in the capacitive sensing type, the touch screen 130 can sense the slightest touch by a user. Therefore, the capacitive sensing type is suitable for the frequent dragging operation as shown in FIG. 6.

The operation of displaying the screen 600 having a list or executing an application to show a list is merely exemplary for convenience of description. When executing an application which requires more dragging operations than the predetermined number per predetermined time period, such a capacitive sensing type may be selected.

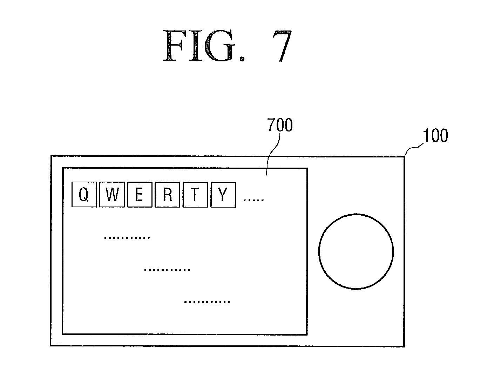

FIG. 7 is a view provided to explain the case in which a resistive sensing type is selected.

If a QWERTY keyboard 700 is displayed or an application to input letters is executed, the display apparatus 100 does not apply a capacitive sensing type to the touch screen 130. More specifically, the display apparatus 100 controls the capacitive type sensor 230 such that it does not operate and thus the capacitive type sensor 230 is disabled.

The reason why the capacitive sensing type is not applied when the QWERTY keyboard 700 is displayed is to prevent a user from experiencing inconvenience when manipulating the QWERTY keyboard 700.

When using the QWERTY keyboard 700, a user often places his or her hands on the QWERTY keyboard 700. However, the capacitive type sensor 230 senses even the slightest touch by a user. Therefore, even when a user puts the hands slightly on the QWERTY keyboard 700, the capacitive type sensor 230 may mistake the action for a touch, and thus cause a malfunction or unintended consequence.

In this case, the display apparatus 100 applies the resistive sensing type to the touch screen 130. In particular, the display apparatus 100 allows the resistive type sensor 210 to operate, and thus the resistive type sensor 210 is enabled.

The reason why the resistive sensing type is applied when a QWERTY keyboard is displayed or an application to input letters is executed, is for convenience of a user manipulating the QWERTY keyboard. As described above, the resistive type sensor 210 operates only by physical pressure. Therefore, even when a user puts his or her hands slightly on the keyboard, the resistive type sensor 210 does not respond to the slight touch by the user, thereby not causing a malfunction or unintended consequence.

The operation of displaying the QWERTY keyboard 700 or executing an application to input letters is merely exemplary for convenience of description. Alternatively, when executing an application which requires more touches than the predetermined number per predetermined time period, such a resistive sensing type may be selected.

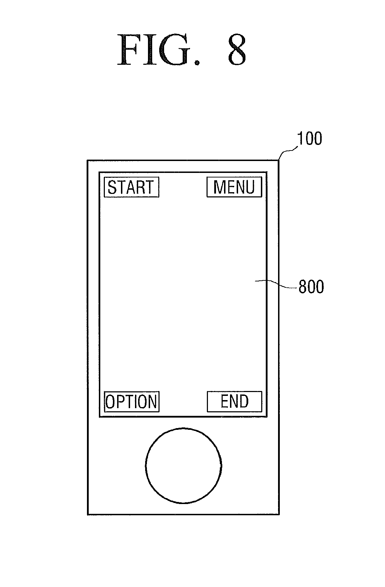

FIG. 8 is a view provided to explain the case in which an infrared sensing type is excluded.

Referring to FIG. 8, a screen 800 having various items at corners is displayed on the touch screen 130 of the display apparatus 100.

If items are displayed at the corner of the touch screen 130, or an application which displays items at corners is executed, the display apparatus 100 does not apply the infrared sensing type to the touch screen 130. In particular, the display apparatus 100 does not allow the infrared type sensor 250 to operate and thus the infrared type sensor 250 is disabled.

The reason why the infrared sensing type is not applied when items are displayed at corners or an application which displays items at corners is executed is because of low touch sensitivity at corners.

In the infrared sensing type, infrared rays are radiated or received from four sides of the touch screen 130, which causes low touch sensitivity at four corners of the touch screen 130.

Therefore, if the infrared sensing type is used when items are displayed at corners of the touch screen 130 or an application which mainly displays items at corners is executed, a user may have to frequently re-touch the touch screen 130 since touch sensitivity is low at the corners of the touch screen 130, and a user's finger gets tired.

The operation of displaying items at the corners of the touch screen 130 or executing an application which displays items at the corners is merely exemplarily provided for convenience of description. Alternatively, if an application which causes frequent touches at the boundary of the touch screen 130 is executed, other sensing types except for such infrared sensing type may be applied.

A single application is executed in this exemplary embodiment of the present invention. However, if a plurality of applications are executed, a sensing type is individually selected for each application, and the touch screen 130 senses a touch by a user according to the sensing type which is selected based on the application currently activated on the touch screen 130.

The above explanation is merely exemplary. Therefore, besides the above exemplary embodiments of the present invention, some of a plurality of sensing types are excluded or selected according to the type of currently executed application or the display state of the application.

The information matching the type of application or the display state of application with an appropriate sensing type or an inappropriate sensing type may be stored in the storage unit 150.

### Touch Sensing Flow

Herein below, the processing flow to sense a touch by a user will be explained with reference to FIGS. 9 and 10.

FIG. 9 is a flowchart provided to explain a method for sensing a touch according to an exemplary embodiment.

If a user inputs a command to execute an application (S910-Y), the display apparatus 100 selects a sensing type which is matched with the corresponding application (S920). As described above, such a sensing type is stored in the storage unit 150 as information matching an application with a sensing type.

The display apparatus 100 executes the application on a screen, and senses a touch by a user under the selected sensing type (S930). The selected sensing type may be one or more types, and if the display apparatus 100 senses the touch under a plurality of sensing types, a final coordinate may be calculated in such a manner of calculating an average of coordinates sensed by each sensing type. In addition, the sensing types except for the selected sensing types are inactivated, and thus sensing means corresponding to the unselected sensing types may not operate.

The display apparatus 100 calculates coordinates at the touched point based on the sensed touch, and operates the application depending on the calculated coordinates (S940).

In doing so, an optimal sensing type is applied for each application, and thus the display apparatus 100 may exhibit excellent performance in sensing a touch by a user. In addition, the display apparatus 100 may avoid user's fatigue caused by malfunction or inconvenience in manipulating the touch screen.

FIG. 10 is a flowchart provided to explain a method for sensing a touch according to another exemplary embodiment of the present invention.

If a user inputs a command to execute an application (S1010-Y), the display apparatus 100 selects a sensing type which is matched with the corresponding application (S1020). As described above, such sensing type is stored in the storage unit 150 as information matching an application with a sensing type.

The display apparatus 100 executes the application on a screen, senses a touch by a user under all the sensing types, not only the selected sensing type, and receives a touch signal according to each sensing type (S1030).

The display apparatus 100 calculates coordinates at the touched point based on the touch signal corresponding to the sensing type which is selected first among the received touch signals, and operates the application depending on the calculated coordinates (S1040).

In doing so, an optimal sensing type is applied for each application, and thus the display apparatus 100 may exhibit excellent performance in sensing a touch by a user. In addition, the display apparatus 100 may avoid user's fatigue caused by malfunction or inconvenience in manipulating the touch screen.

The foregoing exemplary embodiments and advantages are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus, comprising:
a touch screen arranged to sense a touch by a user using a plurality of sensing types; and
a controller arranged to select at least one of the plurality of sensing types based on one of a type of an application being executed and a display state of the application, and to cause the touch to be sensed according to the selected at least one of the plurality of sensing types.

2. The display apparatus as claimed in claim 1, further comprising:
a storage unit arranged to store one of first information matching at least one application with the plurality of sensing types and second information matching the display state with the plurality of sensing types,
wherein the controller is arranged to analyze the first and second information, and to select said at least one of the plurality of sensing types to be applied to the application being executed.

3. The display apparatus as claimed in claims 1 or 2, wherein the plurality of sensing types comprise at least two of a resistive sensing type, a capacitive sensing type, a surface acoustic wave sensing type, an infrared sensing type, an optical sensing type, and a strain gauge sensing type.

4. The display apparatus as claimed in claim 3, wherein if the application being executed requires more dragging operations than a predetermined number per a predetermined time period, the controller is arranged to select the capacitive sensing type.

5. The display apparatus as claimed in one of claims 3 or 4, wherein if the application being executed requires more touch operations than a predetermined number per a predetermined time period, the controller is arranged to select the resistive sensing type.

6. The display apparatus as claimed in one of claims 3 to 5, wherein if the application being executed requires more touch operations than a predetermined number on a boundary of the touch screen, the controller is arranged to select sensing types except for the infrared sensing type.

7. The display apparatus as claimed in one of claims 1 to 6, wherein if a plurality of applications are being executed, the controller is arranged to control that a respective sensing type is selected individually for each application, and that a current touch is sensed according to the respective sensing type which is selected based on the application currently activated on the touch screen among the plurality of applications.

8. A touch sensing method of a display apparatus operable to sense a touch using a plurality of sensing types, the touch sensing method comprising:
selecting at least one of the plurality of sensing types based on one of a type of an application being executed and a display state of the application;
sensing the touch according to the selected at least one of the plurality of sensing types; and
operating the application based on the sensed touch.

9. The touch sensing method as claimed in claimed in claim 8, further comprising:
storing one of first information matching at least one application with the plurality of sensing types and second information matching the display state with the plurality of sensing types
wherein the selecting analyzes the first and second information, and selecting said at least one of the plurality of sensing types to be applied to the application being executed.

10. The touch sensing method as claimed in claims 8 or 9, wherein the plurality of sensing types comprise at least two of a resistive sensing type, a capacitive sensing type, a surface acoustic wave sensing type, an infrared sensing type, an optical sensing type, and a strain gauge sensing type.

11. The touch sensing method as claimed in claim 10, wherein if the application being executed requires more dragging operations than a predetermined number per a predetermined time period, the selecting operation comprises selecting the capacitive sensing type.

12. The touch sensing method as claimed in claims 10 or 11, wherein if the application being executed requires more touch operations than a predetermined number per a predetermined time period, the selecting operation comprises selecting the resistive sensing type.

13. The touch sensing method as claimed in one of claims 10 to 12, wherein if the application being executed requires more touch operations than a predetermined number on a boundary of the touch screen, the selecting selects sensing types except for the infrared sensing type.

14. The touch sensing method as claimed in one of claims 8 to 13, wherein if a plurality of applications are being executed, the selecting operation includes selecting a respective sensing type individually for each application, and the sensing operation includes sensing a current touch according to the respective sensing type which is selected based on the application currently activated on the touch screen among the plurality of applications.
